# EUROPÄISCHE PATENTSCHRIFT

(11) **EP 1 163 304 B1**
(45) Veröffentlichungstag und Bekanntmachung des Hinweises auf die Patenterteilung: **21.07.2004**
(21) Anmeldenummer: 00912505.5
(22) Anmeldetag: 25.02.2000
(51) Int. Cl.: C09D 163/00, C08G 59/42, C08G 59/32

(54) **ÜBERZUGSMITTEL UND DEREN VERWENDUNG BEI DER MEHRSCHICHTLACKIERUNG**
COATING AGENTS AND THEIR USE IN MULTILAYER COATING
AGENTS DE REVETEMENT ET LEUR UTILISATION DANS LA MISE EN PEINTURE A PLUSIEURS COUCHES

(30) Priorität: 27.02.1999 DE 19908627
(43) Veröffentlichungstag der Anmeldung: 19.12.2001
(73) Patentinhaber: E.I. DU PONT DE NEMOURS & COMPANY INCORPORATED, Wilmington, Delaware 19898 (US)
(72) Erfinder: DAHM, Ralf, D-42929 Wermelskirchen (DE); FLOSBACH, Carmen, D-42287 Wuppertal (DE); GAWIN, Hans-Jürgen, D-42285 Wuppertal (DE); KERBER, Hermann, D-42369 Wuppertal (DE); MANASSIS, Apostolos, D-42289 Wuppertal (DE); PASCHMANN, Volker, D-45239 Essen (DE); SCHUBERT, Walter, D-42349 Wuppertal (DE)
(74) Vertreter: Gille Hrabal Struck Neidlein Prop Roos
(86) Internationale Anmeldenummer: PCT/EP2000/001566
(87) Internationale Veröffentlichungsnummer: WO 2000/052107

(56) Entgegenhaltungen:
- EP-A- 0 317 184
- EP-A- 0 351 966
- US-A- 5 686 532

## Beschreibung

Die Erfindung betrifft Überzugsmittel und deren Verwendung bei der Herstellung von Mehrschichtlackierungen, beispielsweise auf dem Kraftfahrzeugsektor, insbesondere bei der Herstellung von Zweischichtlackierungen vom Basislack/Klarlack-Typ.

Unter Esterbildung aushärtende Überzugsmittel auf Basis einer Kombination von epoxidfunktioneller Komponente und carboxyfunktioneller Komponente sind bekannt. Sie zeichnen sich aus durch gute Chemikalien- und Säurefestigkeit der aus ihnen erstellten und eingebrannten Überzüge und sind daher besonders geeignet als Klar- oder Decklacke bei der Automobilserienlackierung.

Es ist wünschenswert bei der Herstellung von Basislack/Klarlack-Zweischichtlackierungen gegen das Ablaufen, insbesondere an senkrechten Flächen während des Einbrennprozesses, stabilisierte Klarlacküberzugsmittel zu verwenden.

Aus der WO 95/27012 sind nicht-wäßrige Überzugsmittel auf Basis eines filmbildenden polymeren Polyepoxids und einer Polysäure als Vernetzer bekannt, die gegen das Ablaufen stabilisiert sind, weil sie eine kolloidale Dispersion carboxyfunktioneller Polymermikroteilchen enthalten. Die Überzugsmittel können als Klarlacküberzugsmittel zur Überlackierung von Basislackschichten eingesetzt werden.

Die Lagerstabilität der aus WO 95/27012 bekannten Überzugsmittel ist abhängig von der Lösemittelzusammensetzung; zufriedenstellende Lagerstabilitäten ergeben sich nur bei Formulierungen mit hoher Polarität der Lösemittelzusammensetzung. Beispielsweise bestehen die Lösemittelzusammensetzungen im wesentlichen aus polaren Lösemitteln. Bei der Überlackierung von Basislackschichten mit Klarlacküberzugsmitteln, die eine polare Lösemittelzusammensetzung aufweisen, kommt es aber oftmals zum Anlösen der Basislackschicht. Negative Folgen des Anlösens sind beispielsweise Farbtonverschiebung, Wolkenbildung, Verschlechterung des Metallic- oder Perlglanzeffektes der erhaltenen Zweischichtlackierung.

Aufgabe der Erfindung ist die Bereitstellung von durch Reaktion von Carboxyl- und Epoxidgruppen vernetzbaren Überzugsmitteln, die die Vorteile eines durch einen Gehalt an Polymermikroteilchen gegen das Ablaufen stabilisierten Überzugsmittels aufweisen, lagerstabil sind und dennoch ein nur wenig ausgeprägtes Anlösevermögen gegenüber mit ihnen überlackierten Überzugsschichten aufweisen. Die Überzugsmittel sollen insbesondere verwendbar sein als Klarlacküberzugsmittel zur Erzeugung von Basislack/Klarlack-Zweischichtlackierungen durch Überlackierung von Basislackschichten, wie sie insbesondere im Bereich der Automobillackierung üblich sind.

Die Aufgabe wird gelöst durch härtbare Überzugsmittel, enthaltend ein Bindemittel/Vernetzersystem, ein oder mehrere organische Lösemittel, sowie gegebenenfalls Pigmente und/oder Füllstoffe und gegebenenfalls weitere lackübliche Additive, wobei das Bindemittel/Vemetzersystem 20 bis 80 Gew.-% einer oder mehrerer gelöster carboxyfunktioneller Komponenten A) ausgewählt aus carboxyfunktionellen (Meth)acrylcopolymeren und/oder carboxyfunktionellen Polyestern, deren Carboxyfunktionalität jeweils einer Säurezahl von 15 bis 300 mg KOH/g entspricht und 20 bis 80 Gew.-% epoxidfunktioneller Vernetzer-Komponenten B) enthält, wobei sich die Gew.-% zu 100 Gew.-% addieren und wobei das Vernetzungsverhältnis zwischen Carboxylgruppen der Komponenten A) und Epoxidgruppen der Komponenten B) zwischen 1 : 1 und 1 : 3 liegt, dadurch gekennzeichnet, daß die epoxidfunktionellen Komponenten B) mindestens eine in der kontinuierlichen Phase des Überzugsmittels gelöste epoxidfunktionelle Vernetzerkomponente B1) und mindestens eine in der kontinuierlichen Phase des Überzugsmittels disperse epoxidfunktionelle Komponente B2) umfassen, wobei das Verhältnis der den epoxidfunktionellen Komponenten B1) und B2) entstammenden Epoxidgruppen zwischen 10 : 1 und 1 : 5 liegt, und wobei die im applikationsfertigen Überzugsmittel enthaltenen organischen Lösemittel zu 0 bis 35 Gew.-% aus einem oder mehreren lacküblichen sauerstoffhaltigen organischen Lösemitteln und zu 65 bis 100 Gew.-% aus einem oder mehreren lacküblichen Kohlenwasserstoffen bestehen, wobei sich die Gew.-% zu 100 Gew.-% addieren.

Das sich zu 100 Gew.-% addierende, zu 0 bis 35 Gew.-% aus lacküblichen sauerstoffhaltigen organischen Lösemitteln und zu 65 bis 100 Gew.-% aus lacküblichen Kohlenwasserstoffen bestehende Lösemittel oder Lösemittelgemisch wird nachstehend als F) bezeichnet.

Das Bindemittel/Vernetzersystem der erfindungsgemäßen Überzugsmittel enthält die Komponenten A), B1) und B2) als wesentliche Komponenten sowie gegebenenfalls nachstehend erläuterte optionale Komponenten C), D) und/oder E). Beispielsweise können die erfindungsgemäßen Überzugsmittel nur die Komponenten A), B1) und B2) als Bindemittel/Vernetzersystem enthalten, oder das Bindemittel/Vernetzersystem der erfindungsgemäßen Überzugsmittel enthält zusätzlich die optionalen Komponenten C), D) und/oder E).

Der Harzfestkörper der erfindungsgemäßen Überzugsmittel wird gebildet aus der Summe der Harzfestkörper bzw. der nichtflüchtigen Anteile der Komponenten A), B1), B2), und der optionalen Komponenten C), D) und E).

Die Härtung der erfindungsgemäßen Überzugsmittel beruht auf der während des Einbrennens stattfindenden chemischen Reaktion der zueinander komplementär reaktiven Gruppen der Komponenten A), B1) und B2); es handelt sich dabei um eine Addition der Carboxyl- an die Epoxidgruppen unter Ausbildung von Carbonsäureesterbindungen.
Die erfindungsgemäßen Überzugsmittel enthalten eine oder mehrere carboxyfunktionelle Komponenten A). Bei der carboxyfunktionellen Komponente A) der erfindungsgemäßen Überzugsmittel handelt es sich um carboxyfunktionelle (Meth)acrylcopolymere und/oder carboxyfunktionelle Polyester, deren Carboxyfucktionalität jeweils einer Säurezahl von 15 bis 300 mg KOH/g entspricht. Die carboxyfunktionellen (Meth)acrylcopolymeren und/oder carboxyfunktionellen Polyester können urethanisiert und/oder durch Umsetzung mit Lactonen modifiziert sein.

Die gegebenenfalls urethangruppenhaltigen und/oder mit Lactonen modifizierten carboxyfunktionalisierten (Meth)acrylcopolymeren der Komponente A) weisen bevorzugt eine zahlenmittlere Molmasse (Mn) von 1000 bis 30000 g/mol auf. Die gegebenenfalls urethangruppenhaltigen und/oder mit Lactonen modifizierten carboxyfunktionalisierten Polyester der Komponente A) weisen bevorzugt eine errechnete Molmasse von 500 bis 4000 g/mol auf. Die Säurezahl liegt jeweils bei 15 bis 300 mg KOH/g, bevorzugt bei 30 bis 250 mg KOH/g.

Bei der Herstellung der carboxylgruppenhaltigen (Meth)acrylcopolymeren oder Polyester der Komponente A), die gegebenenfalls jeweils Urethangruppen enthalten und/oder mit Lactonen modifiziert sein können, können die Carboxylgruppen direkt durch Verwendung carboxylgrappenhaltiger Bausteine eingeführt werden. Beispiele für zum Aufbau von carboxylgruppenhaltigen (Meth)acrylcopolymeren verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkyl(meth)acrylaten mit Carbonsäureanhydriden, wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen und/oder mit Lactonen modifizierten (Meth)acrylcopolymeren oder Polyestern der Komponente A) ist es aber auch möglich, zunächst ein Hydroxylgruppen und gegebenenfalls auch schon Carboxylgruppen enthaltendes Polymer aufzubauen und die Carboxylgruppen ganz oder teilweise in einer zweiten Stufe durch Umsetzung mit Carbonsäureanhydriden einzuführen. Bei dieser Arbeitsweise kann mit solchen Mengenverhältnissen gearbeitet werden, daß gegebenenfalls genügend Hydroxylgruppen übrig bleiben, um eine Urethanisierung durchführen zu können.

Für die Addition an die hydroxylgruppenhaltigen Polymeren, die bereits Carboxylgruppen enthalten können, geeignete Carbonsäureanhydride sind die Anhydride von Di- und Polycarbonsäuren, wie beispielsweise bevorzugt Phthalsäure-, Tetrahydro-, Methylhexahydro- und Hexahydrophthalsäureanhydrid.

Zur Einführung von Hydroxylgruppen in die gegebenenfalls urethangruppenhaltigen und/oder mit Lactonen modifizierten (Meth)acrylcopolymeren der Komponente A) geeignete Monomere sind beispielsweise Hydroxyalkyl(meth)acrylate wie z.B. Hydroxyethyl(meth)acrylat, sowie die bezüglich der Stellung der Hydroxylgruppe isomeren Hydroxypropyl(meth)acrylate, Hydroxybutyl(meth)acrylate und Umsetzungsprodukte aus (Meth)acrylsäure mit dem Glycidylester einer Carbonsäure mit einem tertiären alpha-Kohlenstoffatom. Die Bildung letztgenannter Umsetzungsprodukte kann vor, während oder nach der Polymerisationsreaktion erfolgen.

Bei der Herstellung der (Meth)acrylcopolymeren der Komponente A) können neben den vorstehend genannten Monomeren auch weitere olefinisch ungesättigte Monomere verwendet werden, insbesondere solche, die neben einer olefinischen Doppelbindung keine weiteren funktionellen Gruppen enthalten.

Als weitere olefinisch ungesättigte Monomere geeignet sind beispielsweise insbesondere Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, Cyclohexyl(meth)acrylat, 2-Ethylhexyl(meth)acrylat, Decyl(meth)acrylat, Hexadecyl(meth)acrylat.

Beispiele für weitere, geeignete olefinisch ungesättigte Monomere sind die Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten.

Weiterhin können auch kleine Anteile von Monomeren mit mindestens zwei polymerisierbaren, olefinischen Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Hexandioldi(meth)acrylat, Ethylenglykoldi(meth)acrylat, Butandioldi(meth)acrylat, Hexamethylenbis(meth)acrylamid, Trimethylolpropantri(meth)acrylat, Divinylbenzol und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind alpha-Methylstyrol sowie die isomeren Methylstyrole, insbesondere Vinyltoluole sowie Styrol.

Die Herstellung der (Meth)acrylcopolymeren der carboxyfunktionellen Komponente A) erfolgt beispielsweise durch radikalische Copolymerisation. Dabei kann es sich als vorteilhaft erweisen, einen Teil der Monomeren zeitversetzt zueinander zuzudosieren.

Zur Herstellung der (Meth)acrylcopolymeren der Komponente A) können die Monomeren oder das eingesetzte Monomerengemisch Radikalinitiatoren enthalten. Sofern Radikalinitiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 80 Gew.-%, beispielsweise 50 bis 60 Gew.-% einzustellen.

Die Herstellung erfolgt beispielsweise als dem Fachmann geläufige radikalische Lösungspolymerisation unter Verwendung von beispielsweise 0,1 bis 4 Gew.-%, bezogen auf die Monomeren-Einwaage, eines Radikalinitiators. Beispiele für Radikalinitiatoren sind Dialkylperoxide, Diacylperoxide, Hydroperoxide, Perester, Peroxiddicarbonate, Perketale, Ketonperoxide; Azoverbindungen, wie 2,2'-Azo-bis-(2,4-dimethyl-valeronitril), Azo-bis-isobutyronitril, C-C-spaltende Initiatoren wie z.B. Benzpinakol-Derivate.

Zur möglichen Urethanisierung der carboxyfunktionalisierten (Meth)acrylcopolymeren der Komponente A) können in einem weiteren Reaktionsschritt Hydroxylgruppen der carboxyfunktionalisierten (Meth)acrylcopolymeren der Komponente A) mit Mono-, Di-, Tri- oder Polyisocyanaten umgesetzt werden. Beispiele für zur Urethanisierung einsetzbare Isocyanate sind Phenylisocyanat, sowie die nachstehend bei der Beschreibung der Zusatzvernetzer D) beispielhaft genannten Polyisocyanate und deren durch Umsetzung mit bezogen auf den Isocyanatgehalt unterstöchiometrischen Mengen an Monoalkoholen erhältliche Defunktionalisierungsprodukte. Die Menge der zur Urethanisierung verwendeten Di-, Tri- oder Polyisocyanate wird in dem Fachmann geläufiger Weise so gewählt, daß ein Gelieren vermieden wird. Natürlich ist es ebenfalls möglich, hydroxylfunktionelle (Meth)acrylcopolymere zu urethanisieren, bevor Carboxylgruppen durch Umsetzung mit Säureanhydriden eingeführt werden.

Die carboxylgruppenhaltigen und gegebenenfalls urethangruppenhaltigen und/oder mit Lactonen modifizierten Polyester der Komponente A) können nach üblichen Methoden aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole, wie Ethylenglykol, 1,2-Propandiol, 1,3-Propandiol, 2,2-Diethyl-1,3-propandiol, die isomeren Butandiole, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Ditrimethylolpropan, Trimethylolpropan, Pentaerythrit, sowie Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, die isomeren Phthalsäuren bzw. deren Anhydride sowie deren veresterungsfähige Derivate.

Ebenso wie die bereits beschriebenen carboxyfunktionellen (Meth)acrylcopolymeren der Komponente A) können die carboxyfunktionalisierten Polyester der Komponente A) urethanisiert werden. Die Reaktionsbedingungen und die verwendbaren Polyisocyanate sind die gleichen wie bei den (Meth)acrylcopolymeren. Möglich ist die Einführung der Urethangruppen durch Umsetzung der carboxyl- und hydroxylfunktionellen Polyester mit Mono-, Di-, Tri- oder höherfunktionellen Polyisocyanaten. Ebenfalls möglich ist es, die Urethangruppen bei der Synthese der Polyester selbst einzuführen. Dies geschieht beispielsweise, indem Di- oder Tricarbonsäuren ganz oder teilweise gegen Di- oder Triisocyanate ausgetauscht werden.

Die carboxyfunktionellen (Meth)acrylcopolymerisate und Polyester der Komponente A) können durch Umsetzung mit Lactonen modifiziert sein, z.B. können ein Teil oder sämtliche ihrer Carboxylgruppen mit einem Lacton "kettenverlängert" sein. Gleiches gilt für in den (Meth)acrylcopolymerisaten und Polyestern der Komponente A) gegebenenfalls enthaltene Hydroxylgruppen. Die "Kettenverlängerung" ergibt sich durch unter Ringöffnung verlaufende Anlagerung von Lactonen an die Carboxyl- und/oder Hydroxylgruppen. Dabei entstehen endständige, exponierte Carboxyl- bzw. Hydroxylgruppen. Bevorzugt erfolgt die Anlagerung von Lactonen an carboxyfunktionelle (Meth)acrylcopolymerisate und Polyester der Komponente A), die frei von OH-Gruppen sind. Die Anlagerung des Lactons erfolgt bevorzugt als letzter Syntheseschritt bei der Herstellung der betreffenden Komponente A). Ein Beispiel für ein besonders bevorzugt eingesetztes Lacton ist epsilon-Caprolacton.

Die erfindungsgemäßen härtbaren Überzugsmittel enthalten als epoxidfunktionelle Komponenten B) mindestens eine in der kontinuierlichen Phase des Überzugsmittels gelöste epoxidfunktionelle Vernetzerkomponente B1) und mindestens eine disperse epoxidfunktionelle Komponente B2), wobei das Verhältnis der den epoxidfunktxonellen Komponenten B1) und B2) entstammenden Epoxidgruppen zwischen 10 : 1 und 1 : 5, bevorzugt zwischen 10 : 1 und 1 : 1 liegt.

Bei der Komponente B1) handelt es sich um einen oder mehrere übliche epoxidfunktionelle Vernetzer. Es handelt sich dabei beispielsweise um Verbindungen mit mindestens zwei Epoxidfunktionen im Molekül und einem berechneten Epoxidäquivalentgewicht von beispielsweise 200 bis 700, bevorzugt 250 bis 500 und insbesondere 300 bis 400, jeweils bezogen auf Festharz. Die zahlenmittlere Molmasse (Mn) liegt bevorzugt bei 200 bis 10000 g/mol. Die Glasübergangstemperatur liegt bevorzugt bei -20°C bis 70°C, besonders bevorzugt bei 0°C bis 50°C und insbesondere bei 5°C bis 40°C. Bevorzugt liegt die Obergrenze bei bis zu 50°C.

Beispiele hierfür sind übliche Di- oder Polyepoxide, z.B. Polyglycidylether auf Basis von Diethylenglykol, Dipropylenglykol, Polypropylenglykol, Bisphenol A oder Triglycidylether von Glycerin. Weitere Beispiele für Di- oder Polyepoxide sind solche auf der Basis von Di- oder Polyglycidylestem. Beispiele hierfür sind Umsetzungsprodukte aus 1-Hydroxy-2,3-epoxypropan mit Phthal- oder Terephthalsäure zu Phthal- oder Terephthalsäure-bis(2,3-epoxypropylester) oder einem Diglycidylether von Bisphenol A mit Trimellithsäureanhydrid zu Polyestern, beispielsweise mit einer zahlenmittleren Molmasse (Mn) von 500 bis 2000.

Bevorzugte Komponenten B1) sind übliche epoxidfunktionelle (Meth)acrylcopolymere, insbesondere Glycidyl(meth)acrylat-Copolymere. Als Comonomere können beispielsweise (Meth)acrylsäureester, wie z.B. Methyl-, Ethyl-, Butyl-, Isobutyl-, Ethylhexyl-, Cyclohexyl- und/oder Lauryl(meth)acrylat gewählt werden, Hydroxyalkyl(meth)acrylate wie z.B. Hydroxyethyl- und/oder Hydroxypropyl(meth)acrylat, weiterhin auch Styrol, Vinyltoluol und/oder alpha-Methylstyrol sowie alle alpha, beta-ungesättigten Monomere, wie sie bereits vorstehend bei der Komponente A) beschrieben wurden. Die zahlenmittlere Molmasse (Mn) kann beispielsweise zwischen 1000 und 10000 liegen, bevorzugt bei 2000 bis 5000. Weitere copolymerisierbare epoxidfunktionelle Monomere sind z.B. (Meth)allylglycidylether, 3,4-Epoxy-1-vinylcyclohexan, Epoxycyclohexyl(meth)acrylat, Vinylglycidylether. Die Herstellung der Copolymeren erfolgt beispielsweise über radikalische Lösungspolymerisation, sie ist dem Fachmann bekannt und bedarf keiner weiteren Erläuterung.

Es ist auch möglich, die Komponenten A) und B1) zumindest teilweise in einem weiteren Reaktionsschritt unter Vermeidung von Gelieren zu präkondensieren. Dies kann z.B. dadurch erfolgen, daß man die Komponenten A) und B1) gemeinsam erhitzt. Den gewünschten Kondensationsgrad kann man beispielsweise an der Verringerung der Saurezahl, beispielsweise um 2 bis 5 mg KOH/g Festharz, ermiaeln.

Bei der dispersen epoxidfunktionellen Komponente B2) handelt es sich um eine nichtwäBrige Dispersion von Polymermikroteilchen, die jeweils mehrere Epoxidgruppen aufweisen. Die Epoxidgruppen der Polymermikroteilchen der Komponente B2) dienen gemeinsam mit den Epoxidgruppen der Komponente B1) der Vernetzung des erfindungsgemäßen Überzugsmittels durch Addition an die Carboxylgruppen der Komponente A). Das berechnete Epoxidäquivalentgewicht der Polymermikroteilchen der Komponente B2) beträgt beispielsweise 200 bis 700, bevorzugt 250 bis 500 und insbesondere 300 bis 450, bezogen auf den Festkörper.

Die Teilchengrößen der Polymermikroteilchen der Komponente B2) liegen beispielsweise zwischen 200 nm und 2 µm.

Die Glasübergangstemperatur der Polymermikroteilchen der Komponente B2) liegt bevorzugt bei 30°C bis 80°C, besonders bevorzugt bei 40°C bis 60°C.

Bevorzugt handelt es sich bei den Polymermikroteilchen der Komponente B2) um epoxidfunktionelle (Meth)acrylcopolymere.

Die epoxidfunktionellen (Meth)acrylcopolymermikroteilchen der Komponente B2) werden beispielsweise hergestellt durch radikalische Polymerisation, wie sie dem Fachmann geläufig ist. Bevorzugt erfolgt die radikalische Copolymerisation in Gegenwart von vorgelegtem organischen Lösemittel, bevorzugt in einem organischen Lösemittel oder Lösemittelgemisch, das zu 70 bis 100 Gew.-% aus lacküblichen aliphatischen Kohlenwasserstoffen besteht, wobei der gegebenenfalls zu 100 Gew.-% fehlende Rest aus anderen organischen Lösemitteln, die Bestandteile des Lösemittelgemischs F) sind, gewählt werden kann.

Bei der radikalischen Copolymerisation werden epoxidfunktionelle, radikalisch polymerisierbare, olefinisch ungesättigte Monomere (I) und radikalisch polymerisierbare Comonomere (II) beispielsweise in einem solchen Gewichtsverhältnis eingesetzt, daß ein berechnetes Epoxidäquivalentgewicht der (Meth)acrylcopolymermikroteilchen der Komponente B2) von beispielsweise 200 bis 700, bevorzugt 250 bis 500 und insbesondere 300 bis 450, bezogen auf den Festkörper, erhalten wird.

Als epoxidfunktionelle Monomere (I) können z.B. eingesetzt werden (Meth)allylglycidylether, 3,4-Epoxy-1-vinylcyclohexan, Epoxycyclohexyl(meth)acrylat, Vinylglycidylether, insbesondere jedoch Glycidyl(meth)acrylat.

Die Auswahl der radikalisch copolymerisierbaren Comonomeren (II) erfolgt nach Art und Menge so, daß das fertige (Meth)acrylcopolymer in der kontinuierlichen Phase des erfindungsgemäßen Überzugsmittels, insbesondere der Lösemittelzusammensetzung der kontinuierlichen Phase unlöslich ist. Insbesondere im Lösemittel oder Gemisch organischer Lösemittel F) ist das fertige (Meth)acrylcopolymer unlöslich und bildet darin Polymermikroteilchen aus.

Bei den mit den epoxidfunktionellen olefinisch ungesättigten Monomeren (I) radikalisch copolymerisierbaren Monomeren (II) handelt es sich beispielsweise um solche, die neben der olefinischen Doppelbindung keine weitere funktionelle Gruppe enthalten, beispielsweise Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, (Alkyl)cyclohexyl(meth)acrylat, (Iso)bornyl(meth)acrylat, 2-Ethylhexyl(meth)acrylat, Decyl(meth)acrylat, Hexadecyl(meth)acrylat, Lauryl(meth)acrylat; monovinylaromatische Verbindungen, wie alpha-Methylstyrol, die isomeren Methylstyrole, Vinyltoluole, insbesondere Styrol; Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten.

Die Polymermikroteilchen der Komponente B2) können Hydroxylgruppen enthalten, beispielsweise entsprechend einer auf den Festkörper bezogenen Hydroxylzahl bis zu 60 mg KOH/g, bevorzugt zwischen 0 und 40 mg KOH/g. Zur Einführung eines entsprechenden Hydroxylgruppengehaltes in die als Polymermikroteilchen vorliegenden epoxidfunktionellen (Meth)acrylcopolymeren der Komponente B2) geeignete Comonomere (II) sind beispielsweise Hydroxyalkyl(meth)acrylate wie z.B. Hydroxyethyl(meth)acrylat, bezüglich der Stellung der Hydroxylgruppe isomere Hydroxypropyl(meth)acrylate, Hydroxybutyl(meth)acrylate und Umsetzungsprodukte aus (Meth)acrylsäure und dem Glycidylester einer Carbonsäure mit einem tertiären alpha-Kohlenstoffatom.

Die epoxidfunktionellen (Meth)acrylcopolymermikroteilchen der Komponente B2) können als intern vernetzte Mikrogelteilchen vorliegen oder sie weisen keine oder eine nur geringe interne Vernetzung auf. Im ersteren Fall werden Comonomere (II) mit mindestens zwei radikalisch polymerisierbaren, olefinischen Doppelbindungen im Molekül beispielsweise in einem Anteil von 5 bis 30 Gew.-%, bezogen auf das Gesamtgewicht der zur Herstellung der Mikrogelteilchen eingesetzten Monomeren, eingesetzt, im letzteren Fall liegt der Anteil dieser Monomeren bei 0 bis unter 5 Gew.-%, bezogen auf das Gesamtgewicht der zur Herstellung der nicht oder nur gering intern vernetzten Polymermikroteilchen eingesetzten Monomeren. Beispiele für Comonomere (II) mit mindestens zwei radikalisch polymerisierbaren, olefinischen Doppelbindungen sind Hexandioldi(meth)acrylat, Ethylenglykoldi(meth)acrylat, Butandioldi(meth)acrylat, Hexamethylenbis(meth)acrylamid, Trimethylolpropantri(meth)acrylat, Divinylbenzol. Weitere Beispiele sind Verbindungen, die hergestellt werden können durch Kondensations- oder Additionsreaktion komplementärer Verbindungen, die jeweils neben einer oder mehreren olefinischen Doppelbindungen eine oder mehrere weitere funktionelle Gruppen im Molekül enthalten. Bei den weiteren funktionellen Gruppen der einzelnen komplementären Verbindungen handelt es sich um zueinander komplementär reaktive Gruppen, insbesondere um Gruppen, die im Sinne einer möglichen Kondensations- oder Additionsreaktion miteinander reagieren können. Die Kondensations- oder Additionsreaktion kann dabei vor, während oder nach der Copolymerisation stattfinden.

Weitere Beispiele für durch Kondensationsreaktion hergestellte, mehr als eine olefinische Doppelbindung enthaltende Verbindungen sind aus alkoxysilanfunicrionellen (Meth)acrylmonomeren nach Hydrolyse unter Abspaltung von Alkohol und Ausbildung von Siloxanbrücken gebildete Umsetzungsprodukte. Weitere Beispiele sind aus Hydroxyalkyl(meth)acrylaten und an der Isocyanatgruppe blockierten olefinisch ungesättigten Isocyanaten, wie Isocyanatoalkyl(meth)acrylat oder m-Isopropenyl-alpha,alpha-dimethylbenzylisocyanat unter Abspaltung des Blockierungsmittels und Bildung von Urethangruppen gebildete Umsetzungsprodukte.

Ein weiteres Beispiel für eine durch Additionsreaktion hergestellte, mehr als eine olefinische Doppelbindung enthaltende Verbindung ist das durch ringöffnende Addition der Epoxidgruppe von Glycidyl(meth)acrylat an die Carboxylgruppe von (Meth)acrylsäure unter Bildung einer Ester- und einer Hydroxylgruppe gebildete Umsetzungsprodukt. Weitere Beispiele sind aus Hydroxyalkyl(meth)acrylaten und olefinisch ungesättigten Isocyanaten, wie Isocyanatoalkyl(meth)acrylat oder m-Isopropenyl-alpha,alpha-dimethylbenzylisocyanat unter Bildung einer Urethangruppe gebildete Additionsprodukte.

Bevorzugt sind die in der kontinuierlichen Phase des erfindungsgemäßen Überzugsmittels, insbesondere in der Lösemittelzusammensetzung der kontinuierlichen Phase unlöslichen epoxidfunktionellen (Meth)acrylcopolymermikroteilchen der Komponente B2) von einem an ihrer Oberfläche angeordneten, insbesondere kovalent angebundenen Dispersionsstabilisator umgeben. Der Dispersionsstabilisator ist löslich in der kontinuierlichen Phase des erfindungsgemäßen Überzugsmittels, insbesondere in der Lösemittelzusammensetzung der kontinuierlichen Phase. Das Gewichtsverhältnis von löslichem Dispersionsstabilisator zu unlöslichem Anteil der (Meth)acrylcopolymermikroteilchen der Komponente B2) liegt beispielsweise zwischen 5 : 95 und 50 : 50, bevorzugt zwischen 10 : 90 und 30 : 70.

Bei Dispersionsstabilisatoren im Sinne der vorliegenden Erfindung handelt es sich beispielsweise insbesondere um Makromere, beispielsweise Makromonomere, die in der kontinuierlichen Phase des erfindungsgemäßen Überzugsmittels, insbesondere der Lösemittelzusammensetzung der kontinuierlichen Phase des erfindungsgemäßen Überzugsmittels löslich sind, insbesondere in einem Lösemittel oder einem Gemisch organischer Lösemittel F). Es sind oligo- oder polymere Verbindungen mit einer zahlenmittleren Molmasse (Mn) beispielsweise von 500 bis 20000 mit einer oder mehreren olefinischen, radikalisch polymerisierbaren Doppelbindungen im Molekül. Beispiele sind oligo- oder polymere Verbindungen, in die eine oder mehrere olefinische Doppelbindungen eingeführt worden sind, indem funktionelle Gruppe(n) der oligomeren oder polymeren Verbindungen mit gegenüber der oder den funktionelle(n) Gruppe(n) komplementär reaktiven Gruppen niedermolekularer, ein- oder mehrfach olefinisch ungesättigter Verbindungen umgesetzt worden sind. Im Falle oligo- oder polymerer Verbindungen mit mehreren funktionellen Gruppen können alle oder nur ein Teil der funktionellen Gruppen mit den komplementär reaktiven Gruppen der niedermolekularen, ein- oder mehrfach olefinisch ungesättigten Verbindungen umgesetzt werden. Die Ausbildung einer kovalenten Bindung zwischen funktioneller und gegenüber dieser komplementär reaktiver Gruppe erfolgt durch Kondensations- oder Additionsreaktion. Beispielsweise kommen die gleichen Kondensations- oder Additionsreaktionen in Frage, wie vorstehend im Zusammenhang mit den Comonomeren (In mit mindestens zwei radikalisch polymerisierbaren, olefinischen Doppelbindungen beispielhaft erläutert.

Ein Beispiel für einen verwendbaren Dispersionsstabilisator ist das Umsetzungsprodukt von Poly-12-Hydroxystearinsäure und Glycidyl(meth)acrylat.

Bevorzugt als Dispersionsstabilisatoren sind (Meth)acrylcopolymere. Bevorzugte Beispiele dafür sind geeignet funktionalisierte (Meth)acrylcopolymere, deren funktionelle Gruppen teilweise oder vollständig mit komplementär reaktiven Gruppen niedermolekularer, ein- oder mehrfach olefmisch ungesättigter Verbindungen umgesetzt worden sind, beispielsweise mit Glycidyl(meth)acrylat umgesetzte (Meth)acrylsäurecopolymere, mit (Meth)acrylsäure umgesetzte Glycidyl(meth)acrylatcopolymere, mit Hydroxyalkyl(meth)acrylat umgesetzte isocyanatfunktionelle (Meth)acrylcopolymere oder mit Isocyanatoalkyl(meth)acrylat umgesetzte Hydroxyalkyl(meth)acrylatcopolymere. Die als Dispersionstabilisatoren bevorzugten (Meth)acrylcopolymeren enthalten neben den gegebenenfalls unumgesetzte funktionelle Gruppen aufweisenden und den mit olefinisch ungesättigten Gruppen modifizierten Monomereinheiten einen Anteil von beispielsweise 60 bis 99 Gew.-%, bevorzugt 70 bis 95 Gew.-%, besonders bevorzugt 70 bis 90 Gew.-% an nichtfunktionellen Monomereinheiten. Dadurch wird die Löslichkeit des (Meth)acrylcopolymer-Dispersionsstabilisators in der Lösemittelzusammensetzung der kontinuierlichen Phase des erfindungsgemäßen Überzugsmittels, insbesondere in dem Lösemittel oder Lösemittelgemisch F) gewährleistet. Bei den nichtfunktionellen Monomeren handelt es sich bevorzugt um (Meth)acrylsäurealkylester mit 4 bis 18 C-Atomen im Alkylteil, beispielsweise Butyl(meth)acrylat, Isobutyl(meth)acrylat, tert.-Butyl(meth)acrylat, Hexyl(meth)acrylat, (C1-C12-Alkyl)cyclohexyl(meth)acrylat, (Iso)bornyl(meth)acrylat, 2-Ethylhexyl(meth)acrylat, Decyl(meth)acrylat, Hexadecyl(meth)acrylat, Lauryl(meth)acrylat.

Das berechnete Epoxidäquivalentgewicht der epoxidfunktionellen (Meth)acrylcopolymermikroteilchen der Komponente B2), die einen an ihrer Oberfläche angeordneten, insbesondere kovalent angebundenen Dispersionsstabilisator aufweisen, beträgt beispielsweise 200 bis 700, bevorzugt 250 bis 500 und insbesondere 300 bis 450, bezogen auf den Festkörper (Summe der Festkörperbeiträge von löslichem Dispersionsstabilisator und unlöslichem Polymermikroteilchen).

Die radikalische Copolymerisation zur Herstellung der epoxidfunktionellen (Meth)acrylcopolymermikroteilchen der Komponente B2), die einen an ihrer Oberfläche kovalent angebundenen Dispersionsstabilisator aufweisen, kann beispielsweise so durchgeführt werden, daß eine organische Lösung des copolymerisierbaren Dispersionsstabilisators vorgelegt wird und die Mischung der Monomeren (I) und (II) zudosiert wird. Bevorzugt jedoch wird nur organisches Lösemittel, bevorzugt ein organisches Lösemittelgemisch, das zu 0 bis 20 Gew.-% aus lacküblichen sauerstoffhaltigen organischen Lösemitteln, vorzugsweise ausgewählt aus Ketonen, Estern, Alkoholen, Etherestern, Ethem, Etheralkoholen und/oder Esteralkoholen, zu 0 bis 30 Gew.-% aus lacküblichen aromatischen und/oder araliphatischen Kohlenwasserstoffen und zu 70 bis 100 Gew.-% aus lacküblichen aliphauschen und/oder cycloaliphatischen Kohlenwasserstoffen besteht, wobei sich die Gew.-% zu 100 Gew.-% addieren, vorgelegt und die Monomerenmischung und der copolymerisierbare Dispersionsstabilisator werden zudosiert und radikalisch copolymerisiert. Dabei können Monomerenmischung und Dispersionsstabilisator auch als Mischung zudosiert werden. Selbstverständlich kann auch eine organische Lösung einer Teilmenge des copolymerisierbaren Dispersionsstabilisators vorgelegt und der Rest des copolymerisierbaren Dispersonsstabilisators zudosiert werden.

Bevorzugt werden die epoxidfunktionellen (Meth)acrylcopolymermikroteilchen der Komponente B2) hergestellt durch radikalische Copolymerisation der Monomeren (I) und (II) in Gegenwart eines copolymerisierbaren (Meth)acrylcopolymer-makromeren als Dispersionsstabilisator, besonders bevorzugt eines epoxidfunktionellen (Meth)acrylcopolymer-makromeren. Die epoxidfunktionellen (Meth)acrylcopolymermakromeren können insbesondere erhalten werden durch Umsetzung eines epoxidfunktionellen (Meth)acrylcopolymeren mit einem auf die Epoxidgruppen bezogenen Unterschuß an (Meth)acrylsäure zwecks Einführung olefinischer Doppelbindungen und Bildung des makromeren Dispersionsstabilisators.

Besonders bevorzugte epoxidfunktionelle (Meth)acrylcopolymermikropartikel der Komponente B2) können hergestellt werden durch eine im folgenden dargestellte Synthesesequenz. Zunächst wird ein epoxidfunktionelles (Meth)acrylcopolymer durch radikalische Copolymerisation eines Teils oder der gesamten Menge der zur Herstellung der (Meth)acrylcopolymermikroteilchen der Komponente B2) eingesetzten epoxidfunktionellen Monomeren (I) und einer Teilmenge der zur Herstellung der (Meth)acrylcopolymermikroteilchen der Komponente B2) eingesetzten Monomeren (II) hergestellt. Bevorzugt werden so (Meth)acrylcopolymere mit einem berechneten Epoxidäquivalentgewicht von beispielsweise 300 bis 3000 und einer zahlenmittleren Molmasse (Mn) von 1500 bis 5000 erhalten. Das so hergestellte, organisch gelöste, epoxidfunktionelle (Meth)acrylcopolymere wird mit einem Unterschuß an (Meth)acrylsäure, bezogen auf die Epoxidgruppen, umgesetzt. Dabei werden die Epoxidgruppen zum Teil verbraucht. Nach Beendigung dieser Addition liegt eine organische Lösung eines Epoxidgruppen aufweisenden (Meth)acrylcopolymermakromeren vor, das mit dem gegebenenfalls noch verbliebenen Anteil der zur Herstellung der (Meth)acrylcopolymermikroteilchen der Komponente B2) eingesetzten epoxidfunktionellen Monomeren (I) und der verbliebenen Teilmenge der zur Herstellung der (Meth)acrylcopolymermikroteilchen der Komponente B2) eingesetzten Monomeren (II) copolymerisiert wird unter Bildung von epoxidfunktionellen (Meth)acrylcopolymermikropartikeln der Komponente B2), die an der Panikeloberftäche kovalent angebundene Dispersionsstabilisatorreste aufweisen. Die Epoxidgruppen können also ausschließlich Bestandteil der Dispersionsstabilisatorreste sein oder sie sind sowohl Bestandteil der Dispersionsstabilisatorreste als auch der eigentlichen (Meth)acrylcopolymermikroparrikel.

Bei der Bereitung der erfindungsgemäßen Überzugsmittel werden die Mengenverhältnisse so gewählt, daß zwischen der carboxylgruppenhaltigen Komponente A) und den epoxidfunktionellen Komponenten B1) und B2) ein molares Verhältnis der Carboxyl- zu Epoxidgruppen von 1 : 1 bis 1 : 3, bevorzugt 1 : 1,2 bis 1 : 2,5 vorliegt. Dabei beträgt das Verhältnis der den epoxidfunktionellen Komponenten B1) und B2) entstammenden Epoxidgruppen zwischen 10 : 1 und 1 : 5, bevorzugt zwischen 10 : 1 und 1 : 1.

Die erfindungsgemäßen Überzugsmittel können, jeweils bezogen auf den Feststoffgehalt, 0 bis 30 Gew.-%, beispielsweise 5 bis 30 Gew.-%, eines oder mehrerer Polymerpolyole C) enthalten, bezogen auf die Summe der Feststoffgewichte der Komponenten A), B1) und B2).

Bei den Polymerpolyolen C) kann es sich beispielsweise um aus hydroxyfunktionellen Polyestern, Polyurethanen und/oder (Meth)acrylcopolymeren ausgewählte Polymerpolyole handeln, die verschieden sind von gegebenenfalls Hydroxylgruppen enthaltenden Komponenten A). Die in den erfindungsgemäßen Überzugsmitteln eingesetzten Polymerpolyole C) weisen beispielsweise eine zahlenmittlere Molmasse (Mn) von 500 bis 10000 auf. Die Polymerpolyole C) besitzen mindestens zwei Hydroxylfunktionen im Molekül. Neben den Hydroxylgruppen entsprechend einer Hydroxylzahl von beispielsweise 30 bis 350 mg KOH/g können die Polymerpolyole C) auch Carboxylgruppen entsprechend einer Säurezahl von 0 bis 15 mg KOH/g enthalten. Die Polymerpolyole C) enthalten neben den Hydroxylgruppen und den gegebenenfalls vorhandenen Carboxylgruppen bevorzugt keine weiteren funktionellen Gruppen, insbesondere keine Epoxidgruppen.

Neben den Komponenten A), B1), B2) und C) können die erfindungsgemäßen Überzugsmittel auch ein oder mehrere zusätzliche von Epoxidkomponenten B1) und B2) unterschiedliche Vernetzer D) enthalten, die eine Zusatzvernetzung insbesondere unter Einbezug von Hydroxylgruppen, beispielsweise der im Bindemittelsystem vorhandenen und/oder während des Einbrennens im Zuge der Epoxid/Carboxyl-Additionsreaktion gebildeten Hydroxylgruppen, ermöglichen. Die Zusatzvernetzer D) sind in Mengenanteilen von insgesamt 0 bis 20 Gew.-%, bezogen auf die Summe der Komponenten A), B1), B2) und C) enthalten, jeweils bezogen auf den Feststoffgehalt.

Beispiele für Zusatzvemetzer D) sind lackübliche Aminoplastharze, insbesondere Melaminharze. Beispiele sind butanol-, isobutanol- und/oder methanolveretherte Melaminharze.

Weitere Beispiele für Zusatzvemetzer D) sind unter Estergruppenbildung, insbesondere unter Bildung von Urethangruppen (Carbaminsäureestergruppen) vernetzende Komponenten auf Triazinbasis, wie beispielsweise bevorzugt Tris(alkoxycarbonylamino)triazin.

Weitere Beispiele für Zusatzvemetzer D) sind lackübliche blockierte Polyisocyanate, die aus freien Polyisocyanaten durch Umsetzung mit unter den Einbrennbedingungen wieder abspaltbaren ein aktives Wasserstoffatom enthaltenden Verbindungen hergestellt werden können.

Beispiele für einsetzbare Polyisocyanate sind insbesondere cycloaliphatische und aliphatische Düsocyanate wie Tetramethylendiisocyanat, Hexamethylendiisocyanat, 2,2,4-Trimethylendiisocyanat, Cyclohexan-1,3- und 1,4-diisocyanat, Isophorondüsocyanat, Biscyclohexylmethandiisocyanat sowie davon abgeleitete Polyisocyanate, beispielsweise vom Biuret-, Isocyanurat-, Uretdion-, Carbodiimid-, Urethan- und/oder Allophanatgruppen enthaltenden Typ.

Besonders gut geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiisocyanat oder Hexandiisocyanat ableitende Isocyanurat oder niedermolekulare, Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können.

Es werden übliche Verkappungsmittel eingesetzt, beispielsweise Verbindungen mit einem aktiven Wasserstoffatom, ausgewählt aus CH-aciden Verbindungen wie Acetylaceton, Acetessigsäurealkylester, Malonsäuredialkylester; Alkohole; Oxime wie Methylethylketoxim; Lactame wie epsilon-Caprolactam; Imidazol- oder Pyrazolderivate.

Weitere Beispiele für Zusatzvemetzer D), die in den erfindungsgemäßen Überzugsmitteln enthalten sein können, sind organische Verbindungen, die mindestens zwei cyclische Carbonsäureanhydridgruppen pro Molekül aufweisen. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Ester von Ethylenglykol, Propylenglykol, Diethylenglykol, Triethylenglykol, Neopentylglykol, Glycerin oder Trimethylolpropan, bevorzugt hergestellt im Verhältnis 1 mol Trimellithsäureanhydrid pro mol Hydroxylgruppen.

Weitere geeignete Polyanhydride sind beispielsweise Benzophenontetracarbonsäuredianhydrid und 1,2,4,5-Benzoltetracarbonsäuredianhydrid.

Bevorzugte Polyanhydride sind Copolymerisate von olefinisch ungesättigten Monomeren, die pro Molekül im statistischen Mittel mindestens zwei cyclische Carbonsäureanhydridgruppen aufweisen. Bevorzugt handelt es sich hierbei um Copolymerisate von Maleinsäureanhydrid und/oder Itaconsäureanhydrid mit üblichen Comonomeren wie sie beispielsweise im Zusammenhang mit der Komponente A) beschrieben sind.

Weiterhin können die erfindungsgemäßen Überzugsmittel-0 bis 10 Gew.-% einer oder mehrerer Monoepoxidverbindungen E), bezogen auf die Summe der Komponenten A), B1) und B2) enthalten, jeweils bezogen auf den Festkörper. Dabei handelt es sich um unter den Einbrennbedingungen im wesentlichen nichtflüchtige Substanzen, beispielsweise beträgt der flüchtige Anteil bevorzugt unter 1 Gew.-%, bezogen auf die Gesamtmenge an Monoepoxid E). Die Molmassen der Monoepoxide E) liegen über 150 und bevorzugt sind derartige Verbindungen mit einer zahlenmittleren Molmasse von bis zu 3000, besonders bevorzugt unter 1000.

Beispiele für derartige Verbindungen sind z.B. Umsetzungsprodukte aus einer Diglycidylverbindung, z.B. eines Diglycidylethers, wie einem Mol Bisphenol-A-diglycidylether und einem Mol einer gesättigten oder ungesättigten Monocarbonsäure wie Essigsäure, Propionsäure oder Isononansäure. Weitere Beispiele sind Umsetzungsprodukte von Di- oder Polyepoxiden wie z.B. Polyglycidylether auf der Basis von Diethylenglykol, Dipropylenglykol, Polypropylenglykol mit einem Zahlenmittel des Molgewichts (Mw) von bis zu 2000 und Triglycidylether von Glycerin und/oder Polyphenolen wie Bisphenol A oder F mit den genannten Monocarbonsäuren.

Besonders bevorzugt ist der Glycidylester der Versaticsäure.

Die erfindungsgemäßen Überzugsmittel weisen im applikationsfertigen Zustand beispielsweise einen Festkörpergehalt, gebildet aus dem Harzfestkörper sowie gegebenenfalls enthaltenen weiteren nichtflüchtigen Bestandteilen (wie z.B. Pigmente, Füllstoffe, Additive), von 40 bis 70 Gew.-% auf. Den Rest von beispielsweise 30 bis 60 Gew.-% bilden flüchtige Bestandteile, organische Lösemittel, die bei der Herstellung der erfindungsgemäßen Überzugsmittel separat zugesetzt werden können und/oder die als Bestandteil aus anderen bei der Herstellung der erfmdungsgemäßen Überzugsmittel eingesetzten Komponenten, beispielsweise des Bindemittel/Vernetzersystems, stammen. Bei den organischen Lösemitteln handelt es sich um solche, wie sie bei der Herstellung von Überzugsmitteln üblich sind, wobei es sich bevorzugt bei den im applikationsfertigen Überzugsmittel enthaltenen organischen Lösemitteln um ein Lösemittelgemisch F) handelt.

Die Lösemittel oder Lösemittelgemische F) bestehen zu 0 bis 35 Gew.-% aus lacküblichen sauerstoffhaltigen organischen Lösemitteln und zu 65 bis 100 Gew.-% aus lacküblichen Kohlenwasserstoffen, wobei sich die Gew.-% zu 100 Gew.-% addieren. Der Begriff lackübliche Kohlenwasserstoffe schließt dabei neben lacküblichen aromatischen, araliphatischen, aliphatischen und cycloaliphatischen Kohlenwasserstoffen auch lackübliche Terpenkohlenwasserstoffe ein. Bevorzugte Lösemittelgemische F) bestehen zu 0 bis 35 Gew.-% aus lacküblichen sauerstoffhaltigen organischen Lösemitteln, zu 50 bis 90 Gew.-% aus lacküblichen aromatischen und/oder araliphatischen Kohlenwasserstoffen und zu 5 bis 30 Gew.-% aus lacküblichen aliphatischen und/oder cycloaliphatischen Kohlenwasserstoffen, wobei sich die Gew.-% zu 100 Gew.-% addieren. Besonders bevorzugte Lösemittelgemische F) bestehen zu 5 bis 30 Gew.-% aus lacküblichen sauerstoffhaltigen organischen Lösemitteln, zu 55 bis 80 Gew.- % aus lacküblichen aromatischen und/oder araliphatischen Kohlenwasserstoffen und zu 5 bis 20 Gew.- % aus lacküblichen aliphatischen Kohlenwasserstoffen, wobei sich die Gew.-% zu 100 Gew.-% addieren.

Bei den in den applikationsfertigen, erfindungsgemäßen Überzugsmitteln enthaltenen lacküblichen sauerstoffhaltigen organischen Lösemitteln handelt es sich bevorzugt um ausschließlich Kohlenstoff, Wasserstoff und Sauerstoff enthaltende Lösemittel, vorzugsweise ausgewählt aus Ketonen, Estern, Alkoholen, Etherestern, Ethern, Etheralkoholen und/oder Esteralkoholen. Beispiele für auswählbare Ketone sind Methylethylketon, Diethylketon, Methylisobutylketon, Ethylamylketon, Methylisoamylketon, Diisobutylketon, Cyclohexanon, Isophoron. Beispiele für auswählbare Ester sind Butyrolacton, Propylencarbonat, Ethylacetat, (Iso)butylacetat, (Iso)amylacetat, Propylenglykoldiacetat, bevorzugt ist Butylacetat. Beispiele für auswählbare Alkohole sind Mono- und Dialkohole wie Methanol, Ethanol, n- und Isopropanol, n- und Isobutanol, 2-Ethylhexanol, Cyclohexanol, Benzylalkohol, Isodekanol, Isononylalkohol, Isotridecylalkohol, Ethylenglykol, Propylenglykol, Diethylenglykol, Dipropylenglykol, Triethylenglykol, Hexylenglykol, bevorzugt erfolgt die Auswahl aus n-Butanol und/oder Isodekanol. Beispiele für auswählbare Etherester sind Ethylglykolacetat, Butylglykolacetat, Methylglykolacetat, 3-Methoxy-n-butylacetat, Butyldiglykolacetat, Methoxypropylacetat, Dipropylenglykolmethylester, Ethylethoxypropionat, Ethoxypropylacetat, bevorzugt erfolgt die Auswahl aus Methoxypropylacetat, Butylglykolacetat, Butyldiglykolacetat und/oder Dipropylenglykolmethylester. Beispiele für auswählbare Ether sind Diethylenglykoldimethylether, Dipropylenglykoldimethylether, Ethylenglykoldimethylether, Propylenglykoldimethylether, bevorzugt ist Dipropylenglykoldimethylether. Beispiele für auswählbare Etheralkohole sind Butylglykol, Butoxypropanol, Butyldiglykol, Dipropylenglykolmonomethylether, Dipropylenglykolbutylether, Ethylglykol, Ethyldiglykol, Ethyltriglykol, Ethoxypropanol, Hexylglykol, Isopropylglykol, Methoxypropanol, Methoxybutanol, Methylglykol, Methyldiglykol, bevorzugt erfolgt die Auswahl aus Butylglykol, Butyldiglykol, Dipropylenglykolbutylether und/oder Methoxypropanol. Beispiele für Esteralkohole sind Glykolacetat, Glykolsäurebutylester, Texanol^{R}. Beispiele für weitere lackübliche sauerstoffhaltige organische Lösemittel sind Diacetonalkohol, Methoxyhexanon.

Beispiele für aromatische und araliphatische Kohlenwasserstoffe sind Xylol, Toluol, Tetralin sowie Gemische aromatischer bzw. araliphatischer Kohlenwasserstoffe des Siedebereichs 150 bis 270°C, bevorzugt sind Xylol sowie Kohlenwasserstoffgemische des Siedebereichs 150 bis 210°C.

Beispiele für aliphatische Kohlenwasserstoffe sind n-Heptan, Isoheptan, Cyclohexan, sowie Gemische aliphatischer Kohlenwasserstoffe des Siedebereichs 60 bis 250°C, z.B. Benzin- und Petroleumfraktionen.

Beispiele für Terpenkohlenwasserstoffe sind Dipenten, Pineöl, Terpentin sowie Gemische von Terpenkohlenwasserstoffen des Siedebereichs 160 bis 220°C.

Sollen die erfindungsgemäßen Überzugsmittel als pigmentierte Decklacke beispielsweise bei der Herstellung der äußeren Deckschicht einer Mehrschichtlackierung eingesetzt werden, so enthalten sie Pigmente und gegebenenfalls Füllstoffe. Dabei liegt das Pigment plus Füllstoff/Harzfestkörper-Gewichtsverhältnis beispielsweise im Bereich zwischen 0,05 bis 2 : 1, wobei der Harzfestkörper die Komponenten A), B), C), D) und E) einbezieht. Beispiele für Pigmente sind anorganische und/oder organische Buntpigmente und/oder Effektpigmente, wie z.B. Titandioxid; Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferpthalocyaninpigmente. Beispiele für Füllstoffe sind lackübliche Füllstoffe, wie z.B. Talkum und Silikate.

Weiterhin können die als pigmentierte Decklacke oder bevorzugt als transparente Klarlacke einsetzbaren erfindungsgemäßen Überzugsmittel lackübliche Additive in lacküblichen Mengen, beispielsweise 0 bis 5 Gew.-% bezogen auf den gesamten Lack, enthalten, z.B. transparente Pigmente oder Füllstoffe, Verlaufsmittel, Reaktivverdünner, Farbstoffe, Lichtschutzmittel, Antioxidantien oder weitere, neben den epoxidfunktionellen Polymermikroteilchen B2) verwendbare Rheologiesteuerer, wie z.B. disubstituierte Harnstoffe, spätestens während des Einbrennens Formaldehyd liefernde Verbindungen, Katalysatoren zur Katalyse der Reaktion von Carboxyl- und Epoxidgruppen und/oder zur Katalyse der gegebenenfalls möglichen Zusatzvernetzung.

Die erfindungsgemäßen Überzugsmittel können nach bekannten Verfahren, insbesondere durch Spritzen in Schichtdicken beispielsweise von 25 bis 60 µm appliziert werden. Nach einer Abdunstphase wird das applizierte Überzugsmittel durch Erwärmen vernetzt. Die Einbrenntemperaturen liegen z.B. bei 60 bis 180°C, bevorzugt bei 60 bis 160°C.

Die erfindungsgemäßen Überzugsmittel können beispielsweise zur Herstellung der äußeren pigmentierten Decklackschicht einer Mehrschichtlackierung verwendet werden. Insofern betrifft die vorliegende Erfindung auch die Verwendung der erfindungsgemäßen Überzugsmittel als Decklacküberzugsmittel.

Bevorzugt werden die erfindungsgemäßen Überzugsmittel als transparente Klarlacke formuliert, die zur Herstellung der äußeren Klarlackschicht einer Mehrschichtlackierung verwendet werden können. Insofern betrifft die vorliegende Erfindung auch die Verwendung der erfindungsgemäßen Überzugsmittel als Klarlacküberzugsmittel. Beispielsweise kann das erfindungsgemäße Klarlacküberzugsmittel auf ein mit einer farb- und/oder effektgebenden ein- oder mehrschichtigen Vorbeschichtung versehenes Substrat aufgetragen und eingebrannt werden. Die Einbrenntemperaturen der erfindungsgemäßen Klarlacküberzugsmittel liegen beispielsweise zwischen 60 und 160°C. Für Automobilanwendungen liegen sie beispielsweise zwischen 60 und 140, für Anwendungen in der Automobilserienlackierung insbesondere zwischen 80 und 140 und bevorzugt zwischen 110 und 130°C.

Bevorzugt werden die erfindungsgemäßen Klarlacküberzugsmittel zur Herstellung einer Basislack/Klarlack-Mehrschichtlackierung verwendet. Dabei erfolgt der Auftrag einer farb- und/oder effektgebenden Basislackschicht auf ein gegebenenfalls vorbeschichtetes Substrat, insbesondere auf vorbeschichtete Automobilkarossen oder deren Teile, bevor die Klarlacküberzugsschicht aus einem erfindungsgemäßen Klarlacküberzugsmittel aufgetragen und eingebrannt wird.

Die farb- und/oder effektgebende Basislackschicht kann vor Auftrag der Klarlackschicht aus dem erfindungsgemäßen Klarlacküberzugsmittel eingebrannt werden, bevorzugt jedoch wird das erfindungsgemäße Klarlacküberzugsmittel nach dem bekannten Naß-in-Naß-Verfahren auf die den Farbton der Mehrschichtlackierung bestimmende Basislackschicht aufgetragen. Dabei erfolgt der Auftrag der Basislackschicht durch Spritzen aus einem farb- und/oder effektgebenden wäßrigen oder lösemittelbasierenden Basislack in einer vom Farbton abhängigen Trockenschichtdicke, beispielsweise zwischen 10 bis 25 µm. Im Anschluß an die Applikation der Basislackschicht erfolgt nach einer kurzen Ablüftphase, z.B. bei 20 bis 80°C, der Auftrag der Klarlackschicht aus dem erfindungsgemäßen Klarlacküberzugsmittel beispielsweise durch Spritzen beispielsweise in einer Trockenschichtdicke von im allgemeinen zwischen 25 und 50 µm. Gegebenfalls kann kurz abgelüftet werden. Danach wird das Substrat dem Einbrennprozeß zugeführt, bei dem die Klarlacküberzugsschicht gemeinsam mit der Basislackschicht bei erhöhten Temperaturen beispielsweise von 60 bis 160°C eingebrannt wird.

Die erfindungsgemäßen Überzugsmittel sind lagerstabil und zeichnen sich durch günstige Verarbeitungseigenschaften aus. Sie sind ablaufstabil während des Aushärtens, insbesondere während des Einbrennens. Nach dem Naß-in-Naß-Verfahren mit den erfindungsgemäßen Klarlacküberzugsmitteln überlackierte Basislackschichten werden kaum oder nicht angelöst.

Mit der vorliegenden Erfindung lassen sich Mehrschichtlackierungen, insbesondere Basislack/Klarlack-Zweischichtlackierungen, insbesondere auf Kraftfahrzeugen und deren Teilen mit hervorragendem optisch-ästhetischem Eindruck, guter Bewitterungsstabilität und guter Chemikalien- und Säurefestigkeit herstellen.

### Beispiel 1 (Herstellung eines carboxylfunktionellen Polyesters):

### a) Herstellung eines hydroxyfunktionellen Polyesteroligomeren:

1100 g Trimethylolpropan und 899 g Adipinsäure werden in Gegenwart von 2 g hypophosphoriger Säure bei 180°C bis 240°C in der Schmelze auf eine Säurezahl von 0,5 mg KOH/g verestert. Anschließend wird mit 770 g eines Gemischs aromatischer Kohlenwasserstoffe (Siedebereich 155 °C - 178°C) verdünnt.

Das Produkt hat einen Einbrennrückstand von 64,5 % (1h 150°C) und eine Hydroxylzahl von 390 mg KOH/g, bezogen auf Feststoffgehalt.

### b) Carboxylfunktionalisierung des hydroxyfunktionellen Polyesteroligomeren:

878 g des Produktes aus Beispiel 1a), 622 g Hexahydrophthalsäureanhydrid und 277 g eines Gemischs aromatischer Kohlenwasserstoffe (Siedebereich 155°C - 178°C) werden auf 80°C erhitzt. Nach Abklingen der exothermen Reaktion wird auf 140°C erhitzt und die Reaktion bis zum Erreichen der erwünschten Säurezahl durchgeführt. Anschließend werden 100 g epsilon-Caprolacton zugegeben. Die Umsetzung wird bei 140°C bis zum Erreichen des theoretischen Festkörpergehaltes durchgeführt.

Das carboxylfunktionelle Polyesterharz hat einen Einbrennrückstand von 67,7 % (1h 150°C) und eine Säurezahl von 190 mg KOH/g, bezogen auf Feststoffgehalt.

### Beispiel 2 (Herstellung carboxyfunktioneller Methacrylcopolymermikroteilchen):

a) 197 Teile eines Gemischs aromatischer Kohlenwasserstoffe (Siedebereich 155 - 178°C) werden vorgelegt und auf 140°C erhitzt. Innerhalb 5 h wird eine Mischung aus 60 Teilen Acrylsäure, 295 Teilen Ethylhexylmethacrylat, 189 Teilen Cyclohexylmethacrylat, 47,3 Teilen Laurylacrylat, 10 Teilen eines Gemischs aliphatischer Kohlenwasserstoffe (Siedebereich 140 - 165°C), 1,4 Teilen Dicumylperoxid und 2,9 Teilen Di-tert.-Butylperoxid kontinuierlich zugetropft. Anschließend wird mit 30 Teilen des Gemischs aliphatischer Kohlenwasserstoffe nachgespült und die Reaktionsmischung 4 h bei 150°C nachpolymerisiert. Nach Zugabe weiterer 158 Teile des Gemischs aliphatischer Kohlenwasserstoffe werden bei 140°C 10 Teile Glycidylmethacrylat und 0,2 Teile 2,6-Di-Tertiär-Butyl-4-Methylphenol zugegeben und bis zum Verbrauch der Epoxidgruppen reagiert.
b) 15 Teile eines Gemischs aromatischer Kohlenwasserstoffe (Siedebereich 155 - 178°C), 24 Teile n-Butanol und 114 Teile eines Gemischs aliphatischer Kohlenwasserstoffe (Siedebereich 140 - 165°C) werden vorgelegt und auf 100°C erhitzt. Innerhalb 3 h wird eine Mischung aus 132 Teilen Methylmethacrylat, 47,4 Teilen Acrylsäure, 25 Teilen Styrol, 25 Teilen Hydroxypropylmethacrylat, 115 Teilen der Harzlösung 2a), 60 Teilen des Gemischs aliphatischer Kohlenwasserstoffe, 15,6 Teilen n-Butanol und 1,3 Teilen 2,2-Azo-bis(2-Methylbutannitril) kontinuierlich zugetropft. Die Mischung wird noch 30 min. bei 100°C gerührt.

### Beispiel 3 (Herstellung epoxidfunktioneller Methacrylcopolymermikroteilchen):

a) 292 Teile eines Gemischs aromatischer Kohlenwasserstoffe (Siedebereich 155 - 178°C) werden vorgelegt und auf 140°C erhitzt. Innerhalb 5 h wird eine Mischung aus 175 Teilen Glycidylmethacrylat, 350 Teilen Ethylhexylmethacrylat, 280 Teilen Cyclohexylmethacrylat, 70 Teilen Laurylmethacrylat, 14,6 Teilen eines Gemischs aliphatischer Kohlenwasserstoffe (Siedebereich 140 - 165°C), 2,2 Teilen Dicumylperoxid und 4,4 Teilen Di-tert.-Butylperoxid kontinuierlich zugetropft. Anschließend wird mit 44 Teilen des Gemischs aliphatischer Kohlenwasserstoffe nachgespült und die Reaktionsmischung 4 h bei 150 °C nachpolymerisiert. Nach Zugabe weiterer 234 Teile des Gemischs aliphatischer Kohlenwasserstoffe werden bei 130°C 15 Teile Acrylsäure und 0,3 Teile 2,6-Di-Tertiär-Butyl-4-Methylphenol zugegeben und die Reaktion solange geführt, bis eine Säurezahl < 0,6 mg KOH/g erreicht ist.
b) 6,5 Teile eines Gemischs aromatischer Kohlenwasserstoffe (Siedebereich 155 - 178 °C), 8 Teile n-Butanol und 52 Teile eines Gemischs aliphatischer Kohlenwasserstoffe (Siedebereich 140 - 165°C) werden vorgelegt und auf 100°C erhitzt. Innerhalb 3 h wird eine Mischung aus 50 Teilen Methylmethacrylat, 41 Teilen Glycidylmethacrylat, 11 Teilen Styrol, 50 Teilen der Harzlösung 3a), 26 Teilen des Gemischs aliphatischer Kohlenwasserstoffe, 7 Teilen n-Butanol und 0,6 Teilen 2,2-Azo-bis(2-Methylbutannitril) kontinuierlich zugetropft. Die Mischung wird noch 30 min. bei 100°C gerührt.

### Beispiel 4 (Herstellung epoxidfunktioneller Methacrylcopolymermikroteilchen):

15 Teile eines Gemischs aromatischer Kohlenwasserstoffe (Siedebereich 155 - 178°C), 24 Teile n-Butanol und 114 Teile eines Gemischs aliphatischer Kohlenwasserstoffe (Siedebereich 140 - 165°C)werden vorgelegt und auf 100°C erhitzt. Innerhalb 3 h wird eine Mischung aus 101 Teilen Methylmethacrylat, 94 Teilen Glycidylmethacrylat, 25 Teilen Styrol, 12 Teilen Hydroxypropylmethacrylat, 115 Teilen der Harzlösung 3a), 60 Teilen des Gemischs aliphatischer Kohlenwasserstoffe, 16 Teilen n-Butanol und 1,3 Teilen 2,2-Azo-bis(2-Methylbutannitril) kontinuierlich zugetropft. Die Mischung wird noch 30 min. bei 100°C gerührt.

### Beispiel 5 a - d (Herstellung von Klarlacken und Herstellung von Mehrschichtlackierungen:

Es werden Klarlacke mit der in Tabelle 1 angegebenen Zusammensetzung hergestellt.

Auf mit einer Kataphoresegrundierung und Füllerschicht versehene Bleche wird jeweils ein silberfarbener Basislack in einer Trockenschichtdicke von 15 µm aufgespritzt und 10 Minuten bei 80°C vorgetrocknet. Die Klarlacke 5a - d werden jeweils keilförmig in 10 bis 60 µm Trockenschichtdicke auf die hängenden Bleche aufgespritzt. Nach 5 Minuten Ablüften bei Raumtemperatur wird 20 Minuten bei 140°C (Objekttemperatur) eingebrannt. Die Bleche befinden sich bei allen Operationen in der senkrechten Position.

Es werden jeweils hochglänzende Mehrschichtlackierungen ohne Anlöseerscheinungen des Effektbasislacks erhalten.

Tabelle 1 zeigt neben der Zusammensetzung der Klarlacke ihre jeweilige Ablaufgrenze und Lagerstabilität.

**Tabelle 1**

| Bestandteile (Gew.-Teile): | 5a (Vgl.) | 5b (Vgl.) | 5c (erf.) | 5d (erf.) |
|---|---|---|---|---|
| Harzlösung aus Beispiel 1 | 202 | 128 | 202 | 202 |
| A¹⁾ | 489 | 489 | 416 | 416 |
| B²⁾ | - | 96 (Bsp. 2) | 96 (Bsp. 3) | 96 (Bsp. 4) |
| Melaminharz³) | 70 | 70 | 70 | 70 |
| Lichtschutzmittel⁴⁾ | 20 | 20 | 20 | 20 |
| Verlaufsmittel⁵⁾ | 5 | 5 | 5 | 5 |
| Methoxypropanol | 25 | 25 | 25 | 25 |
| Dipropylenglykoldimethylether | 15 | 15 | 15 | 15 |
| Butanol | 45 | 45 | 45 | 45 |
| Solvesso 100 | 129 | 129 | 129 | 129 |
| Klarlackablaufgrenze (µm) | 31 | 37 | 43 | 39 |
| Lagerstabilität⁶⁾ | > 6 Wochen | 4 Tage | > 6 Wochen | > 6 Wochen |

| | | | | |
|---|---|---|---|---|
| 1) 69 gew.-%ige Lösung eines epoxidiunktionellen Methacrylcopolymeren (Monomerengewichtsverhältnis: 5 % tert.-Burylacrylat, 12 % Butandiolmonoacrylat, 20 % Styrol, 26 % Ethylhexylmethacrylat, 37 % Glycidylmethacrylat; zahlenmittleres Molekulargewicht (Mn) = 4000 in einem 9 : 1-Gemisch aus Solvesso 100 (Gemisch aromatischer Kohlenwasserstoffe mit Siedebereich 155 bis 185°C) und n-Butanol), | | | | |
| 2) Methacrylcopolymermikroteilchen aus Beispiel 2, 3 bzw. 4, | | | | |
| 3) 70 gew.-%ige Lösung eines butylierten Melaminharzes in n-Butanol, | | | | |
| 4) 1 : 1-Gemisch eines Benztriazolderivats und eines sterisch gehinderten Amins (HALS-Typ), | | | | |
| 5) Silikonöl. | | | | |
| 6) Standproben der Klarlacke bei 20°C wurden auf beginnende Phasenseparierung beobachtet. | | | | |

## Patentansprüche

1. Überzugsmittel, enthaltend ein Bindemittel/Vernetzersystem, ein oder mehrere organische Lösemittel, sowie gegebenenfalls Pigmente und/oder Füllstoffe und gegebenenfalls weitere lackübliche Additive, wobei das Bindemittel/Vernetzersystem
A) 20 bis 80 Gew.-% einer oder mehrerer in der kontinuierlichen Phase des Überzugsmittels gelöster carboxyfunktioneller (Meth)acrylcopolymerer und/oder carboxyfunktioneller Polyester, die jeweils urethanisiert und/oder mit Lactonen modifiziert sein können und deren Carboxyfunktionalität jeweils einer Säurezahl von 15 bis 300 mg KOH/g entspricht und
B) 80 bis 20 Gew.-% epoxidfunktioneller Vernetzer enthält,
wobei das Zahlenverhältnis zwischen den Carboxylgruppen der Komponente A) und den Epoxidgruppen der Komponente B) bei 1 : 1 bis 1 : 3 liegt,
**dadurch gekennzeichnet, daß** der epoxidfunktionelle Vernetzer B) mindestens eine in der kontinuierlichen Phase des Überzugsmittels gelöste epoxidfunktionelle Vernetzerkomponente B1) und mindestens eine in der kontinuierlichen Phase des Überzugsmittels dispers vorliegende epoxidfunktionelle Vernetzerkomponente B2) umfaßt,
wobei das Zahlenverhältnis der Epoxidgruppen der Vernetzerkomponenten B1) und B2) bei 10 : 1 bis 1 : 5 liegt und wobei die im applikationsfertigen Überzugsmittel enthaltenen organischen Lösemittel zu 0 bis 35 Gew.-% aus einem oder mehreren lacküblichen sauerstoffhaltigen organischen Lösemitteln und zu 65 bis 100 Gew.-% aus einem oder mehreren lacküblichen Kohlenwasserstoffen bestehen.

2. Überzugsmittel nach Anspruch 1, **dadurch gekennzeichnet, daß** sie als sauerstoffhaltige organische Lösemittel, solche ausgewählt aus Ketonen, Estern, Alkoholen, Etherestern, Ethern, Etheralkoholen und/oder Esteralkoholen und als lackübliche Kohlenwasserstoffe, solche ausgewählt aus aromatischen, araliphatischen, aliphatischen, cycloaliphatischen Kohlenwasserstoffen und/oder lacküblichen Terpenkohlenwasserstoffen enthalten.

3. Überzugsmittel nach einem der Ansprüche 1 und 2, **dadurch gekennzeichnet, daß** sie 0 bis 35 Gew.-% eines oder mehrerer lacküblicher sauerstoffhaltiger organischer Lösemittel, 50 bis 90 Gew.-% eines oder mehrerer lacküblicher aromatischer und/oder araliphatischer Kohlenwasserstoffe und 5 bis 30 Gew.-% eines oder mehrerer lacküblicher aliphatischer und/oder cycloaliphatischer Kohlenwasserstoffe enthalten.

4. Überzugsmittel nach einem der vorhergehenden Ansprüche, **dadurch gekennzeichnet, daß**
C) 0 bis 30 Gew.-% eines oder mehrerer Polymerpolyole, die sich von der Komponente A) unterscheiden, bezogen auf das Festkörpergewicht der Komponenten A), B1) und B2),
D) 0 bis 20 Gew.-% eines oder mehrerer von B) unterschiedlicher Zusatzvernetzer, bezogen auf das Festkörpergewicht der Komponenten A), B1), B2) und C) und/oder
E) 0 bis 10 Gew.-% eines oder mehrerer Monoepoxide, bezogen auf das Festkörpergewicht der Komponenten A), B1) und B2) enthalten.

5. Überzugsmittel nach einem der vorhergehenden Ansprüche, **dadurch gekennzeichnet, daß** sie einen Festkörpergehalt von 40 bis 70 Gew.-% aufweisen.

6. Verfahren zur Herstellung einer Mehrschichtlackierung, bei dem auf ein gegebenenfalls vorbeschichtetes Substrat eine Basislackschicht und anschließend eine Klarlackschicht aufgebracht werden, **dadurch gekennzeichnet, daß** man die Klarlackschicht aus einem der Überzugsmittel gemäß einem der Ansprüche 1 bis 5 appliziert.

7. Verwendung der Überzugsmittel nach einem der Ansprüche 1 bis 5 zur Herstellung von Mehrschichtlackierungen.

8. Verwendung der Überzugsmittel nach einem der Ansprüche 1 bis 5 zur Herstellung von Klarlackschichten.

9. Verwendung nach Anspruch 7 oder 8 zur Lackierung von Kraftfahrzeugen oder deren Teilen.

## Claims

1. Coating compositions comprising a binder/crosslinker system, one or more organic solvents, and optionally pigments and/or fillers and optionally further additives conventional in lacquers, wherein the binder/crosslinker system comprises
A) from 20 to 80 wt.% of one or more carboxy-functional (meth)acrylic copolymers and/or carboxy-functional polyesters which are dissolved in the continuous phase of the coating composition and which may in each case be urethanised and/or modified by lactones and whose carboxy functionality corresponds in each case to an acid number of from 15 to 300 mg KOH/g and
B) from 80 to 20 wt.% epoxy-functional crosslinkers,
wherein the numerical ratio of the carboxyl groups of component A) to the epoxy groups of component B) is from 1:1 to 1:3,
**characterised in that** the epoxy-functional crosslinker B) comprises at least one epoxy-functional crosslinker component B1) dissolved in the continuous phase of the coating composition and at least one epoxy-functional crosslinker component B2) present in dispersed form in the continuous phase of the coating composition,
wherein the numerical ratio of the epoxy groups of crosslinker components B1) and B2) is from 10:1 to 1:5 and wherein the organic solvents contained in the coating composition ready for application consist of from 0 to 35 wt.% of one or more oxygen-containing organic solvents conventional in lacquers and from 65 to 100 wt.% of one or more hydrocarbons conventional in lacquers.

2. Coating compositions according to claim 1, **characterised in that** they contain as the oxygen-containing organic solvents such solvents selected from ketones, esters, alcohols, ether esters, ethers, ether alcohols and/or ester alcohols and as the hydrocarbons conventional in lacquers such hydrocarbons selected from aromatic, araliphatic, aliphatic, cycloaliphatic hydrocarbons and/or terpene hydrocarbons conventional in lacquers.

3. Coating compositions according to either claim 1 or claim 2, **characterised in that** they comprise from 0 to 35 wt.% of one or more oxygen-containing organic solvents conventional in lacquers, from 50 to 90 wt.% of one or more aromatic and/or araliphatic hydrocarbons conventional in lacquers and from 5 to 30 wt.% of one or more aliphatic and/or cycloaliphatic hydrocarbons conventional in lacquers.

4. Coating compositions according to any one of the preceding claims, **characterised in that** they comprise
C) from 0 to 30 wt.% of one or more polymer polyols other than component A), based on the solids weight of components A), B1) and B2),
D) from 0 to 20 wt.% of one or more additional crosslinkers other than B), based on the solids weight of components A), B1), B2) and C), and/or
E) from 0 to 10 wt.% of one or more monoepoxides, based on the solids weight of components A), B1) and B2).

5. Coating compositions according to any one of the preceding claims, **characterised in that** they have a solids content of from 40 to 70 wt.%.

6. Process for the production of a multi-layer lacquer coating, in which a base lacquer layer and then a clear lacquer layer are applied to an optionally precoated substrate, **characterised in that** the clear lacquer layer is applied from one of the coating compositions according to any one of claims 1 to 5.

7. Use of the coating compositions according to any one of claims 1 to 5 in the production of multi-layer lacquer coatings.

8. Use of the coating compositions according to any one of claims 1 to 5 in the production of clear lacquer layers.

9. Use according to claim 7 or 8 in the lacquering of motor vehicles or parts thereof.

## Revendications

1. Agents de revêtement contenant un système de liant/réticulant, un ou plusieurs solvants organiques ainsi que, le cas échéant, des pigments et/ou des charges et, le cas échéant, d'autres additifs usuels pour les peintures, dans lesquels le système de liant/réticulant contient :
A) 20 à 80 % en poids d'un ou plusieurs copolymères (méth)acryliques à fonctionnalité carboxy et/ou polyesters à fonctionnalité carboxy, dissous dans la phase continue de l'agent de revêtement, chacun pouvant être uréthanisé et/ou modifié avec des lactones et dont la fonctionnalité carboxy correspond chaque fois à un indice d'acide de 15 à 300 mg KOH/g et
B) 80 à 20 % en poids de réticulants à fonctionnalité époxyde,
le rapport numérique entre les groupes carboxyle des composants A) et les groupes époxyde des composants B) étant de 1:1 à 1:3, **caractérisé en ce que** le réticulant B) à fonctionnalité époxyde comprend au moins un composant réticulant B1) à fonctionnalité époxyde dissous dans la phase continue de l'agent de revêtement et au moins un composant réticulant B2) à fonctionnalité époxyde présent sous forme dispersée dans la phase continue de l'agent de revêtement,
le rapport numérique entre les groupes époxyde des composants réticulants B1) et B2) étant de 10:1 à 1:5 et les solvants organiques contenus dans l'agent de revêtement prêt à être appliqué sont constitués pour 0 à 35 % en poids d'un ou plusieurs solvants organiques oxydés pour les peintures et pour 65 à 100 % en poids d'un ou plusieurs hydrocarbures usuels pour les peintures.

2. Agents de revêtement selon la revendication 1, **caractérisés en ce qu'**ils contiennent, en tant que solvants organiques oxydés, ceux choisis parmi les cétones, les esters, les alcools, les esters d'éther, les éthers, les alcools d'éther et/ou les alcools d'ester et, en tant qu'hydrocarbures usuels pour les peintures, ceux choisis parmi les hydrocarbures aromatiques, araliphatiques, aliphatiques, cycloaliphatiques et/ou des hydrocarbures terpéniques usuels pour les peintures.

3. Agents de revêtement selon l'une quelconque des revendications 1 et 2, **caractérisés en ce qu'**ils contiennent 0 à 35 % en poids d'un ou plusieurs solvants organiques oxydés usuels pour les peintures, 50 à 90 % en poids d'un ou plusieurs hydrocarbures aromatiques et/ou araliphatiques usuels pour les peintures et 5 à 30 % en poids d'un ou plusieurs hydrocarbures aliphatiques et/ou cycloaliphatiques usuels pour les peintures.

4. Agents de revêtement selon l'une quelconque des revendications précédentes, **caractérisés en ce qu'**ils contiennent :
C) 0 à 30 % en poids d'un ou plusieurs polyols polymères qui se distinguent du composant A), par rapport au poids de corps solide des composants A), B1 et B2),
D) 0 à 20 % en poids d'un ou plusieurs réticulants supplémentaires différents de B) par rapport au poids de corps solides des composants A), B1, B2) et C) et/ou
E) 0 à 10 % en poids d'un ou plusieurs monoépoxydes, par rapport au poids de corps solide des composants A), B1) et B2).

5. Agents de revêtement selon l'une quelconque des revendications précédentes, **caractérisés en ce qu'**ils présentent une teneur en corps solides de 40 à 70 % en poids.

6. Procédé de fabrication d'une peinture à plusieurs couches dans lequel une couche de peinture de base est appliquée sur un substrat le cas échéant préalablement revêtu puis une couche de vernis, **caractérisé en ce qu'**on applique la couche de vernis à partir de l'un des agents de revêtement selon l'une quelconque des revendications 1 à 5.

7. Utilisation des revêtements selon l'une quelconque des revendications 1 à 5 pour fabriquer des peintures à plusieurs couches.

8. Utilisation des revêtements selon l'une quelconque des revendications 1 à 5 pour fabriquer des couches de vernis.

9. Utilisation selon la revendication 7 ou 8 pour mise en peinture de véhicules ou de leurs pièces.
